(19) Europäisches Patentamt

European Patent Office

Office européen des brevets

(11) **EP 0 858 196 A1**

(12) # DEMANDE DE BREVET EUROPEEN

(43) Date de publication:
**12.08.1998 Bulletin 1998/33**

(51) Int Cl.⁶: **H04L 25/03**, H04L 1/00

(21) Numéro de dépôt: **98400247.7**

(22) Date de dépôt: **05.02.1998**

(84) Etats contractants désignés:
**AT BE CH DE DK ES FI FR GB GR IE IT LI LU MC NL PT SE**
Etats d'extension désignés:
**AL LT LV MK RO SI**

(30) Priorité: **06.02.1997 FR 9701343**

(71) Demandeur: **ALCATEL ALSTHOM COMPAGNIE GENERALE D'ELECTRICITE**
**75008 Paris (FR)**

(72) Inventeurs:
• **Perreau, Sylvie**
  **93340 Le Raincy (FR)**
• **Duhamel, Pierre**
  **46 rue Barrault, 75634 Paris Cedex 13 (FR)**

(74) Mandataire: **Scheer, Luc et al**
**COMPAGNIE FINANCIERE ALCATEL**
**Département Propriété Industrielle**
**30, avenue Kléber**
**75116 Paris (FR)**

(54) **Dispositif d'égalisation et de décodage de canal**

(57)     L'invention concerne un dispositif d'égalisation et de décodage de canal d'un signal reçu, présenté sous la forme d'observations successives représentatives d'un signal codé formé de données codées correspondant à un codage convolutif de données source, et transmis dans un canal de transmission, comprenant des moyens (41) de regroupement d'une séquence d'au moins deux observations consécutives, sous la forme d'un vecteur d'observations, lesdites observations étant choisies de façon qu'elles dépendent toutes d'un même ensemble d'au moins deux données source, et des moyens (43) de traitement, alimenté par ledit vecteur d'observations et délivrant un vecteur décodé, formé d'une estimation des données source formant ledit ensemble de données source.

Fig. 4

## Description

Le domaine de l'invention est celui de la réception de signaux numériques, et en particulier de signaux transmis dans des canaux de transmission perturbés et/ou variant dans le temps. Plus précisément, l'invention concerne le traitement de tels signaux, à savoir les opérations d'égalisation et de décodage de canal.

L'invention peut s'appliquer à de très nombreux systèmes de communication et de diffusion, et peut être mise en oeuvre dans tout type de récepteurs. Elle s'applique notamment aux systèmes de radiocommunication avec des mobiles (GSM par exemple), aux systèmes de radio-messagerie, aux systèmes de diffusion de signaux (qu'il s'agisse de données, de sons et/ou d'images)...

On sait que, dans de tels systèmes, le canal de transmission peut provoquer une perturbation importante sur le signal émis. Il est donc nécessaire de traiter le signal reçu, pour limiter l'effet de cette perturbation, et extraire du signal reçu les informations utiles. Classiquement, ce traitement peut comprendre deux opérations : l'égalisation et le décodage de canal.

On met donc en oeuvre, à l'émission, un codage de canal, qui a pour but d'introduire des redondances dans le signal émis, afin de faciliter la récupération des données utiles. On peut notamment utiliser un codage par blocs, ou encore un codage convolutif.

Le principe général du codage convolutif consiste à associer à chaque donnée source à transmettre courante $a_t$ une ou plusieurs données $d_{nt}$ qui sont fonction non seulement de la valeur de la donnée courante $a_t$, mais également d'une ou plusieurs données source précédentes $a_{t-1}$, $a_{t-2}$... Le décodage repose sur une approche symétrique : chaque valeur reçue est décodée en fonction d'une série de valeurs reçues. Cette technique connue est notamment présentée par Viterbi (recherche d'un chemin optimal conduisant à la donnée décodée, dans un treillis de décodage).

Par ailleurs, on fait souvent précéder le décodage de canal d'une égalisation du signal reçu. Cette opération consiste à estimer les perturbations induites par le canal de transmission (par exemple en comparant une séquence de référence reçue à une séquence connue du récepteur) et à réaliser un filtrage adaptatif du signal reçu, avec un profil de filtrage opposé au profil estimé du canal de transmission.

L'égalisation permet de compenser l'interférence intersymbole. Elle est donc mise en oeuvre notamment lorsque le débit des données est de l'ordre, ou supérieur à, la largeur de bande de cohérence du canal de transmission.

Dans les systèmes connus, on effectue donc une égalisation, qui fournit une séquence de symboles codés au décodeur de canal, dans le cas d'une décision dure. ou une information de confiance pour chaque candidat possible de symbole codé, dans le cas d'une décision douce.

Cette dernière alternative peut reposer sur la mise en oeuvre d'égaliseurs reposant sur des modèles de Markov cachés (voir par exemple le document " MAP detection on the Baum-Welch identification algorithm in digital communications" Robert Vallet ; signal processing IV - Theories on applications, 1992), qui délivrent des probabilités maximum a posteriori (MAP) pour chaque symbole codé individuellement.

L'autre possibilité est l'utilisation de l'algorithme à décision douce (SOVA) (voir par exemple le document "TCM on frequency-selective fading channels : a comparison of soft-output probabilistic equalizers" Peter Hoeher ; Proc ITG conference stochastic models in inform. techn. Nurnberg Germany ; Avril 1989, pp. 225-232), qui nécessite moins de calculs et produit une décision dure sur le maximum de vraisemblance du canal, ainsi qu'une décision douce sur les symboles.

L'intérêt principal de ces égaliseurs non-linéaires est qu'ils ne souffrent pas de l'accroissement du bruit ni des propagations des erreurs.

En associant un tel égaliseur avec un décodeur de canal de décision douce, il est possible d'obtenir des résultats de décodage de canal minimisant la probabilité d'erreur de décodage.

Cependant, cette dernière propriété ne se vérifie que dans les situations où la séquence transmise au travers du canal est identiquement statistiquement distribuée. Du fait que cette séquence est une séquence de symboles codés, cette condition n'est satisfaite que dans les situations où l'émetteur met en oeuvre un entrelaceur idéal de grande profondeur.

Il n'est toutefois, en pratique, pas toujours possible de faire appel à un entrelacement. C'est par exemple le cas lorsque la bande passante de cohérence du canal ne nécessite pas d'entrelacement pour éviter les erreurs en blocs (par exemple "boucle d'abonné", canal BCCH du système GSM,....). Dans de tels cas, il apparaît d'ailleurs que les performances des techniques décrites ci-dessus produisent des résultats plus mauvais qu'en l'absence complète de codage. Il n'est donc pas souhaitable, pour résoudre ce problème, d'utiliser un entrelacement, qui au final altérerait la qualité de transmission.

Par ailleurs, l'utilisation d'un entrelacement est donc d'un désentrelacement, augmente la complexité du traitement à la réception, et suppose la mémorisation de nombreuses données. Cela n'est pas toujours souhaitable, notamment en vue de la réalisation de récepteurs bon marché.

Puisque l'égalisation ne peut pas être effectuée d'une façon optimale, du fait du codage, on a envisagé, pour améliorer les performances du système global, de faire en sorte que l'égalisation tienne compte d'informations fournies par le décodeur de canal. Quelques solutions reposant sur cette approche ont déjà été proposées.

Ainsi, dans le document "combined equalization/decoding of trellis coded modulation on frequency selective fading channels", de Ralf Mehlan et Heinrich Meyer ; proc. of the international workshop on digital communications, septembre 1991, on proposait d'utiliser un égaliseur à retour de décision ("decision feed back equalizer", ou DFE) pour combattre l'interférence intersymbole, qui fonctionne en direct ("on-line"). Cet égaliseur était suivi d'un décodeur adaptatif.

L'originalité de la technique décrite dans ce document est la mise à jour, à chaque instant, de certaines des estimations de symboles codés utilisés pour le calcul de l'estimation de l'interférence intersymbole à un instant donné, cette mise à jour étant effectuée à l'aide d'informations délivrées par le décodeur de canal. Ainsi, à l'étape suivante l'égaliseur peut prendre en compte certaines des corrections fournies par le décodeur.

Cependant, du fait que cette correction ne peut être impliquée qu'après un certain délai dépendant du taux de codage, l'égalisation ne peut pas éviter les phénomènes de propagation d'erreurs dans le cas de faibles niveaux du rapport signal à bruit. Cette technique ne permet donc pas d'éviter la propagation d'une erreur et les pertes des performances du fait que le canal n'est pas identiquement statistiquement distribué (séquence blanche temporellement : les symboles émis sont indépendants entre eux).

Il est donc souhaitable que l'opération de décodage de canal soit intégrée directement dans l'opération d'égalisation.

Une première solution de ce type a été proposée, sous le non "supertreillis" basée sur l'utilisation de signaux mettant en oeuvre une modulation codée en treillis (TCM). Cette technique est notamment décrite dans le document "baseband trellis coded modulation with combined equalization/decoding for high bit rate digital subscriver loops", par P. Nohalraj, D.D. Falconer, et Kwasniewski ; proc.. ICC 1990, pp. 807.3. 1 - 807.3.4. et dans le document "decoding of trellis-encoded signals in the presence of intersymbol interference on noise" par PR. Chevillat et E. Leftheriou ; proc. of ICC 1988, pp. 23.1.1-23.1.6. Elle consiste à combiner un treillis de canal de taille $M^N$ (M étant la mémoire du canal et N le nombre d'état possible pour la séquence de symboles transmise) et un treillis de codage de taille $M=2^L$ (L étant la longueur de contrainte du code).

Cette technique entraîne donc une complexité de traitement très importante, et le plus souvent prohibitive. En effet, le "super treillis" considéré présente une complexité de $2^{N \times L}$.

Des techniques ont été proposées pour réduire cette complexité. On a ainsi proposé d'utiliser le M-algorithme, qui limite effectivement la complexité, mais induit une perte de qualité importante.

L'invention a notamment pour objectif de pallier ces différents inconvénients de l'état de la technique.

Plus précisément, un objectif de l'invention est de fournir un dispositif et un procédé d'égalisation et de décodage de canal optimisant ces deux opérations, tout en limitant le nombre d'opérations à effectuer. En d'autres termes, l'invention a pour objectif de fournir un dispositif et un procédé effectuant simultanément l'égalisation et le décodage de canal, avec un nombre d'opérations réduit, et donc compatible avec tout type de récepteur.

Un autre objectif de l'invention est, bien sûr, de fournir un tel dispositif et un tel procédé offrant un taux d'erreurs plus faible que les techniques connues (à complexité égale).

L'invention a également pour objectif de fournir un tel dispositif et un tel procédé, qui permettent de s'affranchir de la mise en oeuvre d'un entrelacement des données transmises, et donc de simplifier d'autant les traitements à la réception.

Un objectif particulier de l'invention est également de fournir un tel dispositif et un tel procédé, qui puissent être mis en oeuvre "en direct" ("on line"), sans connaissance de la réponse impulsionnelle du canal de transmission.

Encore un autre objectif de l'invention est de fournir un tel dispositif et un tel procédé, qui convergent rapidement même dans les cas où l'initialisation du traitement est faite sur un minimum local erroné.

Ces objectifs, ainsi que d'autres qui apparaîtront par la suite, sont atteints selon l'invention à l'aide d'un dispositif d'égalisation et de décodage de canal d'un signal reçu, présenté sous la forme d'observations successives représentatives d'un signal codé formé de données codées correspondant à un codage convolutif de données source, et transmis dans un canal de transmission, dispositif comprenant des moyens de regroupement d'une séquence d'au moins deux observations consécutives, sous la forme d'un vecteur d'observations, lesdites observations étant choisies de façon qu'elles dépendent toutes d'un même ensemble d'au moins deux données source, et des moyens de traitement, alimenté par ledit vecteur d'observations et délivrant un vecteur décodé, formé d'une estimation des données source formant ledit ensemble de données source.

En d'autres termes, l'invention repose notamment sur l'observation que plusieurs observations consécutives du signal reçu sont fonction du même ensemble d'éléments binaires source non codés. Il est donc possible d'exploiter la redondance de l'information, et donc d'optimiser l'égalisation et le décodage de canal.

De façon avantageuse, ledit vecteur d'observations comprend l observations consécutives, l étant la partie entière du quotient N/n, où :

- N représente la mémoire dudit canal de transmission ; et
- n représente le taux dudit codage convolutif, n étant inférieur à N.

Par ailleurs, préférentiellement, ledit vecteur décodé comprend L estimations, L étant la longueur de contrainte dudit codage convolutif.

Alors, les observations successives $\{y_{nk}, y_{nk-1}, ..., y_{nk-l+1}\}$ sont fonction du même ensemble de bits non codés $\{a_k, a_{k-1}, ..., a_{k-L-l+1}\}$.

Avantageusement, lesdits moyens de traitement comprennent :

- des moyens de définition d'un jeu de vecteurs décodés possibles ;
- des moyens de calcul de probabilités, associant à chacun desdits vecteurs possibles une valeur de probabilité qu'il corresponde à un vecteur d'observations ;
- et des moyens de sélection, en tant que vecteur décodé, du vecteur présentant la valeur de probabilité maximum.

Selon un premier mode de réalisation avantageux de l'invention, lesdits moyens de définition délivrent l'ensemble complet des vecteurs possibles.

Toutefois, l'invention permet de fortement réduire le nombre d'opérations à effectuer.

Ainsi, selon un second mode de réalisation avantageux de l'invention, lesdits moyens de définition tiennent compte d'au moins un vecteur décodé précédent, pour fournir un sous-ensemble de vecteurs possibles, sélectionnés parmi l'ensemble complet des vecteurs possibles.

En d'autres termes, selon l'invention, on tient compte du codage, pour élilminer les situations impossibles.

Dans ce cas, lesdits moyens de définition peuvent mettre en oeuvre une chaîne de Markov cachée, basée sur une équation telle que :

$$A_t = T.A_{t-1} + a_t{}^*[1\ 0...0]^T$$

$A_t$ et $A_{t-1}$ étant les vecteurs décodés aux instants t et t-1 respectivement.

$T$ étant un opérateur de décalage, et

$a_t$ étant la donnée source correspondant à l'instant t.

L'invention propose donc une approche particulière des observations reçues, permettant de mettre en oeuvrela technique de Markov.

Dans les cas classiques où des moyens de détermination de la réponse impulsionnelle dudit canal de transmission, indépendants desdits moyens de traitement, sont disponibles, lesdits moyens de traitement peuvent mettre en oeuvre un calcul de probabilité a posteriori des valeurs desdites données source.

Notamment, ledit calcul de probabilité a posteriori peut être basé sur un algorithme de Viterbi et/ou sur une procédure "forward-backward".

En d'autres termes, l'invention peut être mise en oeuvre selon une approche habituelle de type "off line" (traitement différé). Son efficacité et sa simplicité permettent également la mise en oeuvre d'un traitement "on line" (en direct).

Selon cette seconde approche avantageuse, lesdits moyens de traitement comprennent des moyens d'estimation dudit canal de transmission en fonction desdits vecteurs d'observation et desdits vecteurs décodés.

Dans ce cas, lesdits moyens d'estimation peuvent notamment mettre en oeuvre un algorithme d'estimation-maximisation.

L'invention concerne également le procédé d'égalisation et de décodage de canal correspondant.

Un tel procédé comprend notamment les étapes suivantes :

- regroupement d'une séquence d'au moins deux observations consécutives, sous la forme d'un vecteur d'observations, lesdites observations étant choisies de façon qu'elles dépendent toutes d'un même ensemble d'au moins deux données source ;
- traitement dudit vecteur d'observations, délivrant un vecteur décodé, formé d'une estimation des données source formant ledit ensemble de données source.

Enfin, l'invention concerne les récepteurs incorporant le dispositif et/ou mettant en oeuvre le procédé décrit ci-dessus.

D'autres caractéristiques et avantages de l'invention apparaîtront plus clairement à la lecture de la description suivante d'un mode de réalisation préférentiel de l'invention; donné à titre de simple exemple illustratif et non limitatif, et des dessins annexés, parmi lesquels :

- la figure 1 illustre, de façon simplifiée, une chaîne de transmission d'un signal de données ;
- la figure 2 présente un exemple de codeur de canal convolutif pouvant être mis en oeuvre dans la chaîne de transmission de la figure 1, et décodé par le dispositif de l'invention ;
- la figure 3 est le treillis de codage correspondant au codeur convolutif de la figure 2 ;
- la figure 4 illustre, de façon très simplifiée, le principe général de l'invention ;
- les figures 5A et 5B représentent le treillis à l'entrée du canal, dans un exemple correspondant au codeur de la figure 2, respectivement sans (figure 5A) et avec (figure 5B) prise en compte du codage ;
- les figures 6A et 6B montrent la situation rencontrée au voisinage d'un minimum local avec une technique classique (figure 6A) et selon l'invention (figure 6B);
- la figure 7 compare les résultats obtenus, en terme de rapport signal à bruit avec des méthodes classiques et selon l'invention, dans le cas d'un traitement "off line" ;
- la figure 8 compare les résultats obtenus, en terme de rapport signal à bruit avec des méthodes classiques et selon l'invention, dans le cas d'un traitement "on line".

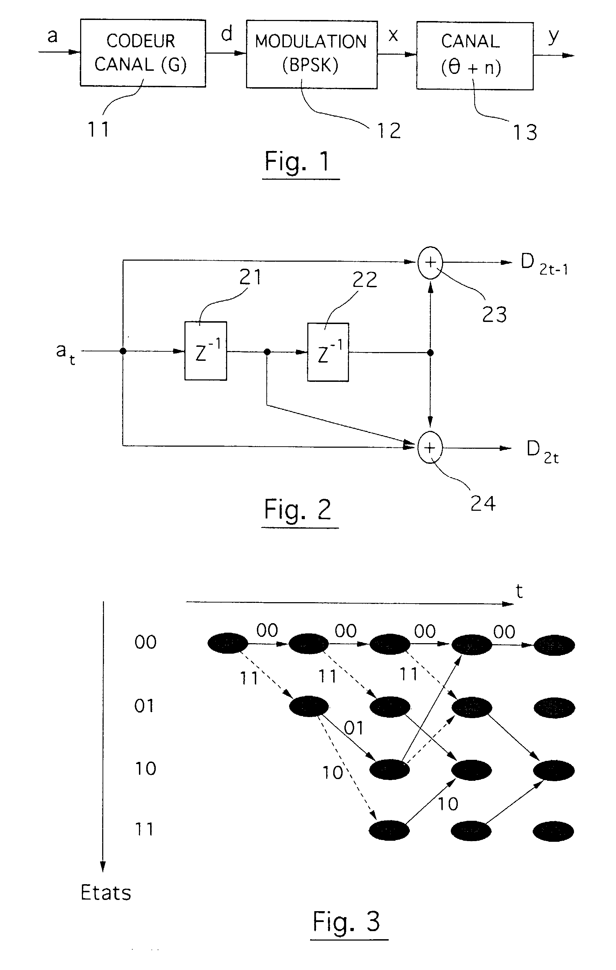

La figure 1 illustre donc, de façon très schématique, la chaîne de transmission de données.

Dans le mode de réalisation décrit ci-dessous, on suppose que le codage mis en oeuvre à l'émission repose sur un code convolutif 11, de taux 1/n et de longueur de contrainte L. L'entrée du codeur est une séquence d'éléments binaires (bits) source à transmettre (bits) $\{a_k\}$. La sortie du codeur est donc une séquence de vecteurs de longueur n :

$$D_k = [d_{nk} \ d_{nk-1} ... d_{nk-n+1}]^T$$

où $V^T$ désigne la transposition du vecteur V.

Chaque composante $D_k^{(i)}$ du vecteur $D_k$ s'écrit :

$$D_k^{(i)} = c_0 a_k \oplus c_1 a_{k-1} \oplus ... \oplus c_{L-1} a_{k-L+1}$$

où :

les coefficients $c_1$ prennent les valeurs 1 ou 0 ;
l'opérateur $\oplus$ dénote l'addition binaire.

En d'autres termes, le vecteur $D_k$ est obtenu à l'aide l'équation suivante :

$$D_k = G * A_k \tag{1}$$

où :

$A_k = [a_k \ a_{k-1} ... a_{k-L+1}]^T$ est un vecteur d'état alimentant le codeur 11,
G est la matrice génératrice du code.
toutes les opérations dans (1) représentées par * sont supposées être réalisées modulo 2.

Le codeur 11 met par exemple en oeuvre un code, connu en soi, du type (2,1,2) tel qu'illustré en figure 2.

Le codeur comprend deux retards 21 et 22, et deux additionneurs modulo 2 23 et 24. Chaque donnée source $a_t$ alimente les deux additionneurs 23 et 24 et le premier retard 21. La sortie du retard 21 alimente le premier retard 22 ainsi que l'additionneur 24. La sortie du second retard 22 alimente les deux additionneurs 23 et 24.

En d'autres termes :

- la sortie $d_{2t-1}$ de l'additionneur 23 vaut $a_t \oplus a_{t-2}$, et

- la sortie $d_{2t}$ de l'additionneur 24 vaut $a_t \oplus a_{t-1} \oplus a_{t-2}$.

La figure 3 illustre le diagramme en treillis correspondant au codeur (2,1,2) de la figure 2.

On suppose, par souci de simplification de la description de l'invention, que les bits $d_{nk-i}$ sont ensuite modulés suivant une modulation BPSK 12 pour donner une suite de symboles à émettre $x_{nk}$.

Ces symboles sont ensuite émis dans un canal de transmission 13, qui introduit un bruit blanc gaussien additif dispersif. Les observations obtenues à la réception peuvent donc être décrites par l'équation suivante :

$$y_t = \Theta^T D_t + n_t \qquad (2)$$

où :

$y_t$ représente le signal observé à la réception,
$\Theta = (\Theta_0, \Theta_1, ..., \Theta_{N-1})^T$ est un vecteur d'échantillons $\{\Theta_i\}$ de réponse impulsionnelle du canal,
N étant la longueur du canal de transmission,
$D_t$ est le vecteur de la séquence de symboles émis vue par la mémoire du canal (N valeurs) à l'instant t :

$$D_t = [d_t\, d_{t-1}\, ...\, d_{t-N+1}]^T$$

avec $d_t \in \{-1\ ;\ +1\}$,
$n_t$ représente le bruit.

On suppose que le taux du code n est inférieur à la mémoire N du canal, et on note 1 la partie entière de la division euclidienne de N par n.

Les inventeurs ont vérifié que, dans ces conditions, les observations successives $\{y_{nk}, y_{nk-l}, ..., y_{nk-l+1}\}$ sont fonction du même ensemble de bits non codés $\{a_k, a_{k-1}, ..., a_{k-L-l+1}\}$, c'est-à-dire:

$$y_{nk} = F_0(a_k, a_{k-1}, ..., a_{k-L-l+1}) + b_{nk}$$

$$y_{nk-1} = F_1(a_k, a_{k-1}, ..., a_{k-L-l+1}) + b_{nk-1}$$

$$...$$

$$y_{nk-l+1} = F_{l-1}(a_k, a_{k-1}, ..., a_{k-L-l+1}) + b_{nk-l+1}$$

où :

$F_i(a_k, a_{k-1}, ..., a_{k-L-l+1})$ est une fonction dépendant des paramètres du canal et du codage.

Selon l'approche nouvelle de l'invention, on constate qu'il est possible d'exploiter la redondance de l'information transmise. Cela permet de traiter le problème du décodage et de l'égalisation de la même façon qu'un problème classique d'égalisation de plusieurs canaux.

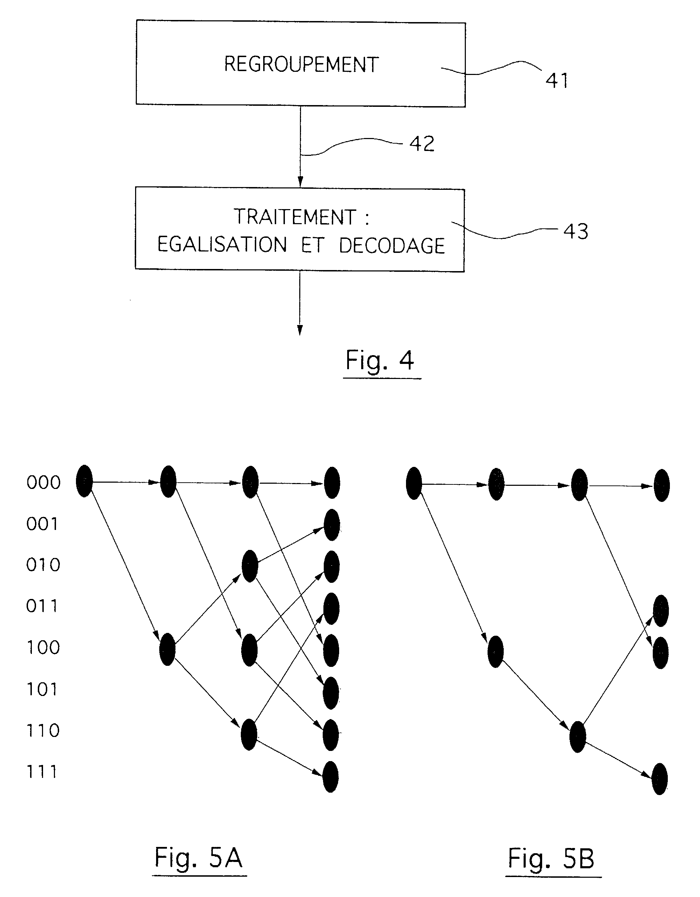

Cette approche est schématiquement illustrée par la figure 4. Elle comprend donc deux étapes essentielles :

- une étape 41 de regroupement de plusieurs (l) observations, produisant un vecteur d'observations 42 ;
- une étape 43 de traitement, durant laquelle on effectue simultanément l'égalisation et le décodage de canal, à partir du vecteur 42.

On notera que ce schéma décrit également symboliquement les moyens mis en oeuvre dans un dispositif selon l'invention : des moyens 41 de regroupement, et des moyens 43 de traitement.

On peut notamment mettre en oeuvre un traitement basé sur un modèle de Markov caché (HMM, pour Hidden Markov Model", en anglais), tel que décrit dans le document Symbol by Symbol MAP detection and the Baum-Welch identification algorithm in digital communications" déjà cité.

Dans ce document, on considérait que l'état de Markov $\{D_t\}$ des données codées définissait un HMM. Les procédures "en avant-en arrière" (connues sous le terme anglais "forward-backward") permettaient d'obtenir des probabilités a posteriori des états, et donc de chaque donnée codée. Ces probabilités alimentaient un décodeur à décision douce.

Cette technique permet d'obtenir des résultats optimaux en terme de rapport signal à bruit. Toutefois, comme déjà signalé en préambule, elle suppose l'utilisation d'un entrelacement, ce qui fait que tant la complexité du traitement que la mémoire nécessaire augmentent exponentiellement avec la mémoire du canal, le facteur de redondance introduit par le codeur et la longueur de contrainte du code. Par ailleurs, l'utilisation d'un entrelacement ne permet pas d'effectuer un décodage direct ("on-line" en anglais).

Classiquement, l'égaliseur délivre des estimations des données codées transmises dans le canal de transmission. En revanche, selon l'approche nouvelle de l'invention, l'égaliseur délivre directement la séquence de données source (non codées) transmise.

Pour cela, on ré-écrit l'équation (2) sous une forme nouvelle, de façon à mettre en évidence un modèle de Markov caché, dans lequel les données source correspondent à un process de Markov, directement déductible des observations disponibles à la sortie du canal.

Du fait de la redondance introduite par le code convolutif, le process stochastique caché $\{A_t\}$ n'est pas markovien. On considère maintenant le vecteur formé par un ensemble d'observations:

$$Y_t = [y_{nt}\ y_{nt-1}\ \cdots\ y_{nt-(n-1)}]^T$$

On vérifie, que chaque composante de ce vecteur peut s'écrire sous la forme d'une combinaison linéaire des éléments de :

$$X_t = [d_{nt}\ d_{nt-1}\ \cdots\ d_{n(t-l)-r+2}]$$

et donc, comme mentionné plus haut, sous la forme d'une combinaison linéaire des composantes du vecteur :

$$A_t = [a_t\ a_{t-1}\ \cdots\ a_{t-l-L+1}]^T \tag{3}$$

En conséquence, on a:

$$Y_t = H(X_t) + B_t = H(G^*A_t) + B_t \tag{4}$$

où :

H est une matrice dont les coefficients dépendent de la réponse impulsionnelle du canal et
G est une matrice dépendant de la matrice génératrice du codage et de la modulation.

La matrice G génère un "mappage" (en anglais "mapping") des vecteurs $X_t$ correspondant à une réalisation du process caché $A_t$. La probabilité d'erreur est donc inférieure à celle obtenue dans le cas où l'on considère systématiquement toutes les réalisations possibles de $X_t$.

Il est à noter que l'équation (4) peut être interprétée comme l'équation d'observation d'un système suréchantillonnné. En d'autres termes, la formulation de l'invention permet de bénéficier explicitement de la redondance introduit par le codeur : plusieurs observations sont fonction du même ensemble de données source non codées.

On peut donc définir un modèle de Markov caché par l'état $A_t$ qui est un process de Markov de premier ordre stationnaire, que l'on peut représenté par l'équation suivante :

$$A_t = TA_{t-1} + a_t * [1\ 0\ \cdots\ 0]^T \tag{5}$$

où : T est un opérateur de décalage.

D'une façon générale, on considère ici que le bruit additif est un bruit blanc gaussien, de valeur moyenne nulle et de variance $\sigma^2$ connue.

La technique de l'invention permet de mettre en oeuvre un décodage différé ("off line" en anglais) ou direct ("on line" en anglais). On présente ci-après, successivement, les deux approches.

Dans le cas de l'approche "off line", on considère que la réponse impulsionnelle du canal H est connue, par exemple par analyse d'un signal de référence régulièrement transmis.

On note $A = (A_8, a_2, ..., a_T)$ la séquence de bits source. A étant l'ensemble de taille $2^T$ de toutes les séquences possibles $A^{(k)} = [l_1^{(k)}\ l_2^{(k)}\ \cdots\ l_T^{(k)}]$, avec $l_i^{(k)} \in [0, 1]$, on peut définir la solution optimale la valeur $\hat{A} = (\hat{a}_1, \hat{a}_2, ..., \hat{a}_T)$ telle que :

$$P(\hat{A}\big|y_1, ..., y_T) = \max_{A^{(k)} \in A} P(A = A^{(k)}\big|y_1, ..., y_{nT}) \tag{6}$$

Du fait que la séquence de bits source est identiquement statistiquement distribuée, on a :

$$\max_{A^{(t)} \in A} P(A = A^{(k)} | Y_1, ..., Y_T) = \max_{A^{(k)} \in A} \prod_{i=1}^{T} P(a_i = l_i^{(k)} | Y_1, ..., Y_T) \qquad (7)$$

$$= \prod_{i=1}^{T} \max_{l_i^{(k)} \in \{1:0\}} P(a_i = l_i^{(k)} | Y_1, ..., Y_T) \qquad (8)$$

Ce problème est discuté, sous le non "problem 1" du HMM, dans le document "A tutorial on hidden Markov Models and selected applications in speech recognition"; par L. Rabiner (proc IEEE v77, n° 2, pp. 257-285, 1989). il s'agit, étant donnée une séquence d'observations ($Y_1$, $Y_2$, ..., $Y_T$) de déterminer la séquence de données source ($a_1$, $a_2$, ..., $a_T$) optimale.

La solution à ce problème peut être obtenue soit à l'aide de l'algorithme de Viterbi, soit à l'aide de procédures "Forward-Backward". Ces dernières permettent d'obtenir les probabilités a posteriori pour chaque état $A_t$ défini dans l'équation (5), $Pr(A_t = \xi_i | Y_1, ..., Y_T)$ pour chaque réalisation possible $\xi_i$ du process $A_t$.

La probabilité a posteriori d'un bit source non codé $a_t$ est donc obtenue à l'aide de l'équation :

$$\Pr(a_t = l | Y_1^T) = \sum_{A_t, a_t = l} \Pr(A_t = \xi_i | Y_1^T) \qquad (9)$$

On décrit maintenant plus précisément les procédures "Forward-Backward". Etant donné les observations $\{Y_1, ..., Y_t\}$, le traitement "Forward" (en avant, ou pour le futur) est décrit dans les documents suivants :

- "A tutorial on hidden Markov Models ans selected applications in speech recognition" déjà cité;
- "On-line Estimation of hidden Markov Model Parameters Based on the Kullback-Leibler Information Measure", V. Krishnamurthy et J. B. Moore (IEEE Trans. SP Vol. 41, N° 8, août 1993) ;
- "Adaptive blind equalization of FIR channels using Hidden Markov Models", L. B. White et V. Krishnamurthy (IEEE ICC, Genève 1993);
- "Symbol by Symbol MAP detection and the Baum-Welch identification algorithm in digital communications" déjà cité.

L'équation à résoudre est :

$$P(A_t = \xi_i | Y_1, ..., Y_t) = P(Y_t | A_t = \xi_i) * \sum_{k} P(A_{t-1} = \xi_k | Y_1, ..., Y_{t-1}) * P(A_t = \xi_i | A_{t-1} = \xi_k) \qquad (10)$$

En se référant à l'équation (4), et en tenant compte du fait que le vecteur $B_t$ est un vecteur gaussien de taille n, on déduit que :

$$P(Y_t | A_t = \xi_i) = N(|Y_t - H(G * \xi_i)|) \qquad (11)$$

où $N()$ représente la distribution gaussienne de $n^{ième}$ dimension.

De façon similaire, la récursion "backward" (ou vers l'arrière, ou pour le passé) est donné par :

$$P(A_t = \xi_i | Y_{t+1}, ..., Y_T) = \sum_k P(A_{t+1} = \xi_k | Y_{t+2}, ..., Y_T) * P(Y_{t+1} | A_{t+1} = \xi_k) * (P(A_{t+1} = \xi_k | A_t = \xi_k) \qquad (12)$$

La probabilité a posteriori pour chaque état est donc donnée par l'équation suivante :

$$P(A_t = \xi_i | Y_1, ..., Y_T) = \frac{P(A_t = \xi_i | Y_1, ..., Y_t) * P(A_t = \xi_i | Y_{t+1}, ..., Y_T)}{N_t} \qquad (13)$$

où $N_t$ est une constante de normalisation à l'instant t.

On peut facilement vérifier que la technique selon l'invention est très avantageuse, en termes de complexité des traitements effectués.

Ainsi, la technique connue décrite dans le document "Symbol by Symbol MAP detection and the Baum-Welch identification algorithm in digital communications" déjà cité réalise une égalisation avant décodage à décision douce présentant une complexité d'ordre $n * T * 2^{(N+1)} + T * 2^{(n-L+1)}$. Cela correspond à l'addition des tailles des deux treillis mis en oeuvre :

- $2^N$ est le nombre d'états possibles à l'entrée de l'égaliseur ;
- le nombre de données à traiter est $n * T$ ;
- $2^{L+1}$ est le nombre d'états possibles en entrée pour chacune des $2^n$ combinaisons possibles à la sortie.

En revanche, selon l'invention, l'état de Markov à considérer est de longueur L + l, avec N = l * n + r. Le nombre d'états possibles est donc $2^{(L+l)}$. De plus, puisqu'on associe à chaque état $A_t$ un vecteur de n observations consécutives $Y_t = [y_{nt} \ y_{nt-1} \ ... \ y_{nt-n+1}]$, seulement T (au lieu de n * T) récursions "forward" et "backward" sont effectuées.

La complexité est donc seulement de l'ordre de $T * 2^{(L+1)}$. La réduction de la complexité correspond à la réduction du nombre de récursions à effectuer et à la réduction du nombre de transitions entre les états $\{D_{nt-n+1}, D_{nt-n+2}, ..., D_{nt}\}$ interdites par le codeur, ainsi que cela est illustré par les figures 4A et 4B.

Dans cet exemple, on considère le cas du codeur de la figure 2, de taux 1/2 et de longueur de contrainte 2. La figure 3 illustre les transitions autorisées de l'état de sortie $(D_{2t-l}, D_{2t})$ du codeur. On considère par ailleurs que la mémoire du canal est de longueur N = 3.

Les figures 5A et 5B représentent les treillis à l'entrée du canal, respectivement sans (figure 5A) et avec (figure 5B) prise en compte du codage.

Pour simplifier les figures, on suppose que tous les bits $(a_1, a_2, a_3, a_4)$ valaient zéro, et donc que la séquence codée correspondante $(D_1, D_2, D_3, D_4)$ vaut (0, 0, 0, 0). En conséquence, les deux premiers états du treillis d'entrée du canal $(D_3, D_2, D_1)$ et $(D_1, D_3, D_2)$ valent tous les deux (0, 0, 0).

On suppose encore que l'état de départ du treillis est $(D_4, D_3, D_2)$.

Alors, à l'instant suivant, les états possibles du treillis sont (0, 0, 0) et (1,0,0) dans les deux treillis.

Si on considère le premier cas, $D_5$ prend la valeur 0, et le seul état $(D_5, D_6)$ correspondant dans le treillis de codage est (0, 0). Cela signifie que le seul état possible pour l'entrée du canal pour l'instant suivant est $(D_6, D_5, D_4) = (0, 0, 0)$ (voir figure 5A), alors que l'état (1, 0, 0) est également considéré lorsque l'égaliseur ne prend pas en compte le codage canal (voir figure 5B).

On constate donc que la technique de l'invention permet d'éviter la réalisation de calculs inutiles, ce qui explique sa complexité moindre.

De plus, on peut noter que les besoins en mémoire sont fortement réduits du fait qu'aucune mémorisation de probabilités a posteriori avant d'effectuer le décodage n'est nécessaire.

Le tableau I suivant donne plusieurs exemples numériques montrant que la complexité du décodage est réduite, selon l'invention, par rapport au décodage optimal classique à décision douce. On considère que la longueur de mémoire du codeur est L = 3.

Tableau I

| | 1/n=1/3,N=3 | 1/n=1/4,N=3 | 1/n=1/3,N=4 | 1/n=1/7,N=4 |
|---|---|---|---|---|
| algorithme de l'invention | 48 | 32 | 48 | 56 |

Tableau I   (suite)

|  | 1/n=1/3,N=3 | 1/n=1/4,N=3 | 1/n=1/3,N=4 | 1/n=1/7,N=4 |
|---|---|---|---|---|
| décodeur optimal | 176 | 320 | 224 | 2160 |

On décrit maintenant le cas du traitement "on line". Contrairement à la situation préalablement exposée, on considère maintenant que la réponse impulsionnelle du canal n'est pas connue. C'est par exemple le cas des systèmes où le canal varie dans le temps (cas des communications avec des mobiles). Dans de tels systèmes, la technique "off-line" est peu efficace, lorsque le canal varie durant le traitement d'un bloc de données.

Il est alors souhaitable de mettre en oeuvre une approche "on line", qui suive les variations dans le temps de la réponse impulsionnelle du canal. Le problème du décodage canal séquentiel simultanément à l'estimation des paramètres du canal peut être résolu à l'aide de l'algorithme d'estimation-maximisation séquentiel, appliqué à la formulation basée sur un modèle de Markov caché.

Ainsi que cela est décrit dans le document "Adaptive blind equalization of FIR channels using Hidden Markov Models" déjà cité, on peut mettre en oeuvre unique la récursion "forward", pour assurer la détection séquentielle des bits non codés. Cela entraîne une perte de performances par rapport à la technique "off line". en termes de rapport signal à bruit, mais les simulations montrent que cette perte n'est pas significative.

L'algorithme d'estimation-maximisation est notamment décrit dans les documents suivants :

- "Maximum Likelihood from incomplete data via the EM aigorithm". A. P. Dempster, N. M. Laird et D. B. Rubin (J. Roy. Soc vol. 6, 1977) ;
- "On-line Estimation of hidden Markov Model Parameters Based on the Kullback-Leibler Information Measure", déjà cité ;
- "Adaptive blind equalization of FIR channels using Hidden Markov Models", déjà cité ;
- "Reduced Computation Blind Equalization for FIR channel input Markov Models", L. B. White, P. Duhamel (proceedings of ICC, juin 1995, Seattle, USA).

L'étape d'estimation correspond à l'estimation de la fonction de Kullback-Leibler (KL) à l'instant t, définie comme l'estimation du logarithme de la finction de vraisemblance pour la donnée complète.

En utilisant la terminologie de l'article "Maximum Likelihood from incomplete data via the EM algorithm", le vecteur de données complet à l'instant t est $Z_t = (Y_t, A_t)$, et il faut trouver le vecteur H qui présente le maximum de vraisemblance :

$$Q_i(\hat{H}_i, H) = \sum_i P(A_i = \xi_i | \hat{H}_i, Y_i) \log(P(A_i = \xi_i | Y_i, H) \qquad (14)$$

$$Q_i(\hat{H}_i, H) = (\frac{-1}{2\sigma^2}) \sum_{\xi_i} P(A_i = \xi_i | \hat{H}_i, Y_i) \| Y_i - \mathbf{H}(\mathbf{G} * \xi_i) \|^2 \qquad (15)$$

où : $Q_t()$ est l'espérance de la log-vraisemblance conditionnellement aux observations et à l'estimation du canal.

L'étape de maximisation consiste à maximiser, en fonction de H :

$$L_t(\hat{H}_0, \hat{H}_1, ..., \hat{H}_1, H)$$

puisque cette maximisation augmente la vraisemblance des observations, comme cela est montré dans le document "Maximum Likelihood from incomplete data via the EM algorithm" déjà cité.

Selon ce document, la fonction L à maximiser est évalué de la façon suivante :

$$L_i(\hat{H}_0, \hat{H}_1, ..., \hat{H}_i, H) = (\frac{-1}{2\sigma^2}) \sum_{k=0}^{t} Q_k(\hat{H}_k, H) \qquad (16)$$

Un algorithme "on line" doit pouvoir suivre les variations des paramètres variant dans le temps. Pour cela, on introduit une constante "d'oubli" $\lambda$ dans l'estimation :

$$L_t(\hat{H}_0, \hat{H}_1, ..., \hat{H}_t, H) = (\frac{-1}{2\sigma^2})\sum_{k=0}^{t}\lambda^{(t-k)}Q_k(\hat{H}_k, H) \qquad (17)$$

Comme décrit dans "Maximum Likelihood from incomplete data via the EM algorithm", l'étape de maximisation est réalisée de façon récursive :

$$\hat{H}_{t+1} = \hat{H}_t + R_t^{-1} \; S(y_t, \hat{H}_t) \qquad (18)$$

avec $R_t$ et S définis de la façon suivante :

$$S(y_t, \hat{H}_t) = \frac{\partial Q(H, \hat{H}_t)}{\partial H}\Big|_{H=\hat{H}_t} \qquad (19)$$

$$R_t = \frac{\partial^2 Q(H, \hat{H}_t)}{\partial H}\Big|_{H=\hat{H}_t} \qquad (20)$$

Après calculs, on obtient les équations de mise à jour suivantes :

$$\hat{H}_{t+1} = \hat{H}_t + R_t^{-1}\sum_{k=0}^{n-1}(y_{nt-k} - \hat{H}_t^T\hat{D}_{nt-k})\hat{D}_{nt-k} \qquad (21)$$

$$R_t = \lambda R_{t-1} + \sum_{k=0}^{n-1}\hat{D}_{nt-k}\hat{D}^T_{nt-k} \qquad (22)$$

avec :

$$(\hat{D}_{nt}, ...\hat{D}_{nt-n+1}) = \sum_{\xi_t}P(A_t = \xi_i|\hat{H}_t, Y_t) \qquad (23)$$

Il est à noter que, outre la simplification introduite dans les calculs, l'invention permet de résoudre plusieurs problèmes liés à des minima locaux.

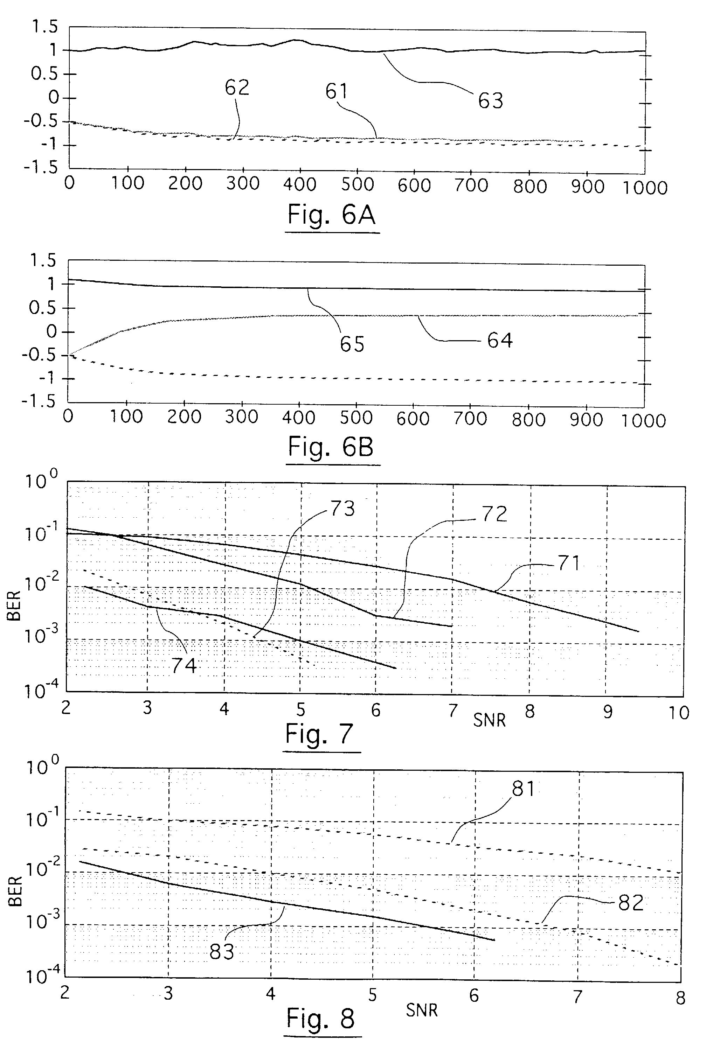

Ainsi, lorsque l'initialisation est proche d'un minimum local, le processus d'adaptation (équation (21)) permet d'échapper à celui-ci. Cela est illustré par les figures 6A et 6B. La figure 6A illustre la situation rencontrée dans le cas d'une égalisation classique : l'égalisation 61 suit le minimum local 62, et non le canal de transmission 63.

En revanche, selon l'invention (figure 6B), l'égalisation 64 converge vers le canal 65.

La technique de l'invention s'avère également avantageuse dans le cas de canaux particuliers, qui induisent des comportements mauvais pour les égaliseurs non-linéaires classiques.

Les figures 7 et 8 montrent l'efficacité de l'invention, en terme de rapport signal à bruit, sur l'exemple suivant :

- mémoire du canal : N = 3 ;
- réponse impulsionnelle : $\Theta = [0,5\ 0,7\ 0,5]^T$ ;
- longueur du code : 3 ;

- taux du code : 1/2.

La figure 7 illustre la situation "off line", respectivement avec l'algorithme de Viterbi (71), avec un décodeur à décision dure (72), avec un décodeur à décision douce et un entrelacement (11, 12) (73) et selon l'invention (74).

On constate donc que l'invention permet d'obtenir des performances similaires à un décodage à décision douce et un entrelacement, sans nécessiter un tel entrelacement.

La figure 8 illustre l'aspect "on line". La courbe 81 illustre le cas connu d'un égaliseur suivi d'un décodeur. Les courbes 82 et 83 sont obtenues selon la technique de l'invention. Les meilleurs résultats (83) correspondent à la mise en oeuvre de la technique "fixed lag smoothing" décrite dans le document "Adaptive blind equalization of FIR channels using Hidden Markov Models", déjà cité.

**Revendications**

1. Dispositif d'égalisation et de décodage de canal d'un signal reçu, présenté sous la forme d'observations successives représentatives d'un signal codé formé de données codées correspondant à un codage convolutif de données source, et transmis dans un canal de transmission,
   caractérisé en ce qu'il comprend des moyens (41) de regroupement d'une séquence d'au moins deux observations consécutives, sous la forme d'un vecteur d'observations, lesdites observations étant choisies de façon qu'elles dépendent toutes d'un même ensemble d'au moins deux données source,
   et des moyens (43) de traitement, alimenté par ledit vecteur d'observations et délivrant un vecteur décodé, formé d'une estimation des données source formant ledit ensemble de données source.

2. Dispositif selon la revendication 1, caractérisé en ce que ledit vecteur d'observations comprend l observations consécutives, l étant la partie entière du quotient N/n, où :

   - N représente la mémoire dudit canal de transmission ; et
   - n représente le taux dudit codage convolutif, n étant inférieur à N.

3. Dispositif selon l'une quelconque des revendications 1 et 2, caractérisé en ce que ledit vecteur décodé comprend L estimations, L étant la longueur de contrainte dudit codage convolutif.

4. Dispositif selon l'une quelconque des revendications 1 à 3, caractérisé en ce que lesdits moyens de traitement comprennent :

   - des moyens de définition d'un jeu de vecteurs décodés possibles ;
   - des moyens de calcul de probabilités, associant à chacun desdits vecteurs possibles une valeur de probabilité qu'il corresponde à un vecteur d'observations ;
   - et des moyens de sélection, en tant que vecteur décodé, du vecteur présentant la valeur de probabilité maximum.

5. Dispositif selon la revendication 4, caractérisé en ce que lesdits moyens de définition délivrent l'ensemble complet des vecteurs possibles.

6. Dispositif selon la revendication 4, caractérisé en ce que lesdits moyens de définition tiennent compte d'au moins un vecteur décodé précédent, pour fournir un sous-ensemble de vecteurs possibles, sélectionnés parmi l'ensemble complet des vecteurs possibles.

7. Dispositif selon la revendication 6, caractérisé en ce que lesdits moyens de définition mettent en oeuvre une chaîne de Markov cachée, basée sur une équation telle que :

$$A_t = T.A_{t-1} + a_t * [1 \; 0...0]^T$$

$A_t$ et $A_{t-1}$ étant les vecteurs décodés aux instants t et t-1 respectivement,
$T$ étant un opérateur de décalage, et
$a_t$ étant la donnée source correspondant à l'instant t.

8. Dispositif selon l'une quelconque des revendications 1 à 7, du type comprenant des moyens de détermination de la réponse impulsionnelle dudit canal de transmission, indépendants desdits moyens de traitement, caractérisé en ce que lesdits moyens de traitement mettent en oeuvre un calcul de probabilité a posteriori des valeurs desdites données source.

9. Dispositif selon la revendication 8, caractérisé en ce que ledit calcul de probabilité a posteriori est basé sur un algorithme de Viterbi et/ou sur une procédure "forward-backward".

10. Dispositif selon l'une quelconque des revendications 1 à 7, caractérisé en ce que lesdits moyens de traitement comprennent des moyens d'estimation dudit canal de transmission en fonction desdits vecteurs d'observation et desdits vecteurs décodés.

11. Dispositif selon la revendication 10, caractérisé en ce que lesdits moyens d'estimation mettent en oeuvre un algorithme d'estimation-maximisation.

12. Procédé d'égalisation et de décodage de canal d'un signal reçu, présenté sous la forme d'observations successives représentatives d'un signal codé formé de données codées correspondant à un codage convolutif de données source, et transmis dans un canal de transmission,
caractérisé en ce qu'il comprend les étapes suivantes :

   - regroupement (41) d'une séquence d'au moins deux observations consécutives, sous la forme d'un vecteur d'observations, lesdites observations étant choisies de façon qu'elles dépendent toutes d'un même ensemble d'au moins deux données source ;
   - traitement (43) dudit vecteur d'observations, délivrant un vecteur décodé, formé d'une estimation des données source formant ledit ensemble de données source.

13. Récepteur d'un signai reçu, présenté sous la forme d'observations successives représentatives d'un signal codé formé de données codées correspondant à un codage convolutif de données source, et transmis dans un canal de transmission,
caractérisé en ce qu'il comprend des moyens d'égalisation et de décodage de canal comprenant:

   - des moyens (41) de regroupement d'une séquence d'au moins deux observations consécutives, sous la forme d'un vecteur d'observations, lesdites observations étant choisies de façon qu'elles dépendent toutes d'un même ensemble d'au moins deux données source ; et
   - des moyens (43) de traitement, alimenté par ledit vecteur d'observations et délivrant un vecteur décodé, formé d'une estimation des données source formant ledit ensemble de données source.

a → | CODEUR CANAL (G) | → d → | MODULATION (BPSK) | → x → | CANAL ($\theta + n$) | → y

11          12          13

## Fig. 1

$a_t$ →   $Z^{-1}$ (21)    $Z^{-1}$ (22)

$D_{2t-1}$   (23)

$D_{2t}$   (24)

## Fig. 2

t →

Etats

00    00    00    00    00

11    11    11

01    01

10    10

11

## Fig. 3

```
┌─────────────────────────────────────┐
│                                      │
│          REGROUPEMENT                │ ～ 41
│                                      │
└─────────────────────────────────────┘
                    │
                    │ ～ 42
                    ▼
┌─────────────────────────────────────┐
│        TRAITEMENT :                  │
│    EGALISATION  ET  DECODAGE         │ ～ 43
│                                      │
└─────────────────────────────────────┘
                    │
                    ▼
```

<u>Fig. 4</u>

000
001
010
011
100
101
110
111

<u>Fig. 5A</u>                    <u>Fig. 5B</u>

Fig. 6A

Fig. 6B

Fig. 7

Fig. 8

**Office européen des brevets**

## RAPPORT DE RECHERCHE EUROPEENNE

Numéro de la demande

EP 98 40 0247

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| P,X | PERREAU S ET AL: "An equalizer including a soft channel decoder" FIRST IEEE SIGNAL PROCESSING WORKSHOP ON SIGNAL PROCESSING ADVANCES IN WIRELESS COMMUNICATIONS (CAT. NO.97TH8281), PARIS, FRANCE, 16-18 APRIL 1997, 16 avril 1997, NEW YORK, USA, pages 9-12, XP002063867 * le document en entier * | 1-13 | H04L25/03 H04L1/00 |
| D,X | VALLET R.: "Symbol by symbol MAP detection and the Baum-Welch identification algorithm in digital commmunications" SIGNAL PROCESSING VI, THEORIES AND APPLICATIONS, PROCEEDINGS OF EUSIPCO-92, 6TH EUROPEAN SIGNAL PROCESSING CONFERENCE, BRUSSELS, BELGIUM, vol. I, 24 août 1992, AMSTERDAM, NL, pages 131-134, XP000348631 * page 131 - page 133; figure 1 * | 1,4-6, 8-13 | |
| A | PERREAU S ET AL: "A reduced computation multichannel adaptive equalizer based on HMM" PROCEEDINGS. 8TH IEEE SIGNAL PROCESSING WORKSHOP ON STATISTICAL SIGNAL AND ARRAY PROCESSING (CAT. NO.96TB100040), CORFU, GREECE, 24-26 JUNE 1996, 1996, LOS ALAMITOS, USA, pages 156-159, XP002063868 * le document en entier * | 1-13 | **DOMAINES TECHNIQUES RECHERCHES (Int.Cl.6)** H04L |

-/--

Le présent rapport a été établi pour toutes les revendications

| Lieu de la recherche | Date d'achèvement de la recherche | Examinateur |
|---|---|---|
| LA HAYE | 29 avril 1998 | Koukourlis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

# RAPPORT DE RECHERCHE EUROPEENNE

Numéro de la demande

EP 98 40 0247

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | RABINER L R: "A TUTORIAL ON HIDDEN MARKOV MODELS AND SELECTED APPLICATIONS IN SPEECH RECOGNITION" PROCEEDINGS OF THE IEEE., vol. 77, no. 2, 1 février 1989, NEW YORK US, pages 257-285, XP000099251 * page 261, colonne de gauche, alinéa 4 - colonne de droite, alinéa 3 * * page 262, colonne de droite, alinéa 2 - page 263, colonne de droite, alinéa 2 * --- | 1,4-13 | |
| D,A | CHEVILLAT P R ET AL: "DECODING OF TRELLIS-ENCODED SIGNALS IN THE PRESENCE OF INTERSYMBOL INTERFERENCE AND NOISE" IEEE TRANSACTIONS ON COMMUNICATIONS., vol. 37, no. 7, juillet 1989, NEW YORK US, pages 669-676, XP000038496 * page 670, colonne de droite, alinéa III-A * --- | 1,10,12, 13 | |
| A | JONG J M ET AL: "FULL DUPLEX PCM SIGNAL DECODING" PROCEEDINGS OF THE ASILOMAR CONFERENCE ON SIGNALS, SYSTEMS AND COMPUTERS, PACIFIC GROVE, NOV. 5 - 7, 1990, vol. 1 OF 2, 5 novembre 1990, pages 483-486, XP000280067 * page 485, colonne de gauche, alinéa 2 - colonne de droite, alinéa 3 * --- -/-- | 1,7,12, 13 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 29 avril 1998 | Koukourlis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen
des brevets

**RAPPORT DE RECHERCHE EUROPEENNE**

Numéro de la demande

EP 98 40 0247

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | WERN-HO SHEEN ET AL: "MLSE EQUALIZATION AND DECODING FOR MULTIPATH-FADING CHANNELS" IEEE TRANSACTIONS ON COMMUNICATIONS., vol. 39, no. 10, 1 octobre 1991, NEW YORK US, pages 1455-1464, XP000275310 * alinéa I - alinéa III * | 1-3,12, 13 | |
| D,A | KRISHNAMURTHY V. AND MOORE J. B.: "On-Line Estimation of Hidden Markov Model Parameters Based on the Kullback-Leibler Information Measure" IEEE TRANSACTIONS ON SIGNAL PROCESSING., vol. 41, no. 8, août 1993, NEW YORK US, pages 2557-2573, XP002043735 * abrégé * * page 2557 - page 2558, alinéa 1 * * page 2559, alinéa II-B * | 1,7-13 | |
| A | KALEH G K ET AL: "JOINT PARAMETER ESTIMATION AND SYMBOL DETECTION FOR LINEAR OR NONLINEAR UNKNOWN CHANNELS" IEEE TRANSACTIONS ON COMMUNICATIONS., vol. 42, no. 7, 1 juillet 1994, NEW YORK US, pages 2406-2413, XP000456247 * abrégé * * page 2406, colonne de droite, alinéa 3 * | 7,11 | **DOMAINES TECHNIQUES RECHERCHES (Int.Cl.6)** |

Le présent rapport a été établi pour toutes les revendications

| Lieu de la recherche | Date d'achèvement de la recherche | Examinateur |
|---|---|---|
| LA HAYE | 29 avril 1998 | Koukourlis, S |